# EUROPÄISCHE PATENTSCHRIFT

(11) **EP 3 329 203 B1**
(45) Veröffentlichungstag und Bekanntmachung des Hinweises auf die Patenterteilung: **26.10.2022**
(21) Anmeldenummer: 16775089.2
(22) Anmeldetag: 14.09.2016
(51) Int. Cl.: F28G 1/16, B01D 46/00, B08B 9/043, F28G 3/16, F28G 15/00, F28G 15/02, F28G 15/04, F28G 15/06, F28G 15/08, B01D 46/79

(54) **VERFAHREN UND VORRICHTUNG ZUM REINIGEN VON ROHRBÜNDELN**
METHOD AND DEVICE FOR CLEANING TUBE BUNDLES
PROCÉDÉ ET DISPOSITIF POUR LE NETTOYAGE DE FAISCEAUX TUBULAIRES

(30) Priorität: 21.09.2015 DE 102015218114
(43) Veröffentlichungstag der Anmeldung: 06.06.2018
(73) Patentinhaber: LOBBE Industrieservice GmbH & Co KG, 58642 Iserlohn (DE)
(72) Erfinder: EISERMANN, Reinhard, 58642 Iserlohn (DE); SKALETZ, Bodo, 46539 Dinslaken (DE); BERNARD, Adrian, 58640 Iserlohn (DE)
(74) Vertreter: WSL Patentanwälte Partnerschaft mbB
(86) Internationale Anmeldenummer: PCT/EP2016/071627
(87) Internationale Veröffentlichungsnummer: WO 2017/050614

(56) Entgegenhaltungen:
- WO-A1-2004/088235
- WO-A1-2015/144889
- WO-A2-2011/078916
- DE-C1- 19 932 539
- US-A1- 2009 255 557
- US-B1- 6 681 839
- Anonymous: "Linear encoder - Wikipedia", , 29. Oktober 2016 (2016-10-29), XP055319213, Gefunden im Internet: URL:https://en.wikipedia.org/wiki/Linear_e ncoder [gefunden am 2016-11-14]
- Anonymous: "Rotary encoder - Wikipedia, the free encyclopedia", , 30. Juli 2015 (2015-07-30), XP055303340, Gefunden im Internet: URL:https://en.wikipedia.org/w/index.php?t itle=Rotary_encoder&oldid=673856541 [gefunden am 2016-09-16]

## Beschreibung

Die Erfindung betrifft ein Verfahren zum Reinigen von Rohrbündeln, insbesondere von Rohrbündeln von Wärmetauschern, Luftkühlern, Kondensatoren, Rohren oder Filterkerzen gemäß dem Oberbegriff des Anspruchs 1.

Ferner betrifft die Erfindung eine Vorrichtung zum Reinigen von Rohrbündeln mit stirnseitig offenen Enden, insbesondere von Rohrbündeln von Wärmetauschern, Luftkühlern, Kondensatoren, Rohren oder Filterkerzen gemäß dem Oberbegriff des Anspruchs 8.

Rohrbündel sind in vielfältigen Anwendungen, beispielsweise bei Wärmetauschern, Kondensatoren, Luftkühlern, usw. im industriellen Einsatz. Je nach Wärmeträgermedium lässt es sich nicht vermeiden, dass die Rohre der Rohrbündel sich über einen längeren Nutzungszeitraum mit Verschmutzungen oder dgl. zusetzen oder verkrusten, was zur Folge haben kann, dass einzelne Rohre sogar vollständig ausfallen. Es ist deshalb notwendig die Innenseite der Rohre solcher Rohrbündel und gegebenenfalls den Spiegel des Rohrbündels von Zeit zu Zeit zu reinigen.

Dies geschieht in der Regel in der Weise, dass die Rohrbündel geöffnet und manuell angefahren werden und ein an seinem vorderen Ende mit einer Spritzdüse versehener Hochdruckschlauch durch die einzelnen Rohre hindurchgeschoben wird, so dass aus der Spritzdüse spritzende unter hohem Druck stehende Reinigungsflüssigkeit, insbesondere Wasser, die Ablagerungen auf den Innenwandungen der Rohre entfernt. Die Bedienungsperson ist dabei verschiedenen Gefahren ausgesetzt, je nachdem, in welcher Umgebung das Rohrbündel angeordnet ist und je nach Art und Beschaffenheit der Verschmutzungen in den Rohren. Außerdem lässt sich bei einer manuellen Reinigung durch eine Bedienungsperson nicht zuverlässig vermeiden, dass möglicherweise bei einer Reinigung verschiedene Rohre versehentlich ausgelassen und nicht gereinigt werden.

Aus der DE 34 18 835 C2 ist ein Verfahren und eine Vorrichtung zum Reinigen von Rohrbündeln bekannt, wobei ein Hochdruckschlauch zum Einsatz kommt. Diese bekannte Vorrichtung dient insbesondere dazu, radioaktiv kontaminierte Rohrbündel im Wesentlichen ohne manuelle Arbeit in deren unmittelbarer Nähe reinigen zu können. Dazu sind bei der bekannten Vorrichtung an einem Reinigungswagen eine Videokamera und Lampen angeordnet und es ist ein entfernt angeordnetes Steuergerät mit Handhebeln und mit einem Monitor für die Videokamera vorgesehen, welches die Bewegungen des Reinigungswagens und des Hochdruckschlauches steuert.

Diese teilautomatische Lösung erfordert aber nach wie vor Bedienungspersonal, welches das entfernte Steuergerät mit Handhebeln steuert und dabei die Tätigkeit über die Bilder der Videokamera verfolgt. Bedienungsfehler sind dadurch nach wie vor nicht ausgeschlossen, d.h. es kann nicht gewährleistet werden, dass auch sämtliche Rohre des jeweiligen Rohrbündels gereinigt werden.

Die US 4,095,305 A offenbart eine Reinigungsvorrichtung für Rohrbündel, bei der anstelle eines Hochdruckschlauches eine Reinigungslanze in die zu reinigenden Rohre eingeführt wird. Diese bekannte Vorrichtung weist eine XY-Verschiebeeinrichtung auf, die am Rohrbündel befestigt ist. Die XY-Verschiebeeinrichtung benötigt ein Gestell mit vertikalen und horizontalen Streben, wobei die horizontalen Streben manuell längs der vertikalen Streben verschiebbar ausgebildet sind. Auf den horizontalen Streben ist ein horizontal verfahrbarer Schlitten vorgesehen, an dem eine kombinierte Antriebseinrichtung für die Rotation der Reinigungslanze und für den Vortrieb angeordnet ist.

Zur Abstützung der Reinigungslanze sind mehrere Ständer vorgesehen, die im Abstand zueinander aufgestellt werden und eine Schiene tragen, auf der Lanzenführungselemente sowie eine am Reinigungslanzenende angeordnete Drehanschlusseinrichtung zum Anschließen eines Rohres für die Zuführung der Reinigungsflüssigkeit verfahrbar angeordnet sind. Diese Ständer sind in horizontaler Richtung manuell verfahrbar, damit bei der Reinigung einer horizontalen Reihe von Rohren die Ständer nachgefahren werden können. Um eine weitere horizontale Reihe reinigen zu können, muss die Schiene an allen Ständern manuell in vertikaler Richtung verschoben werden. Gleichzeitig müssen an der XY-Verschiebeeinrichtung die horizontalen Streben mit dem Schlitten und der darin angeordneten Antriebseinrichtung in vertikaler Richtung ebenfalls verschoben werden.

Diese bekannte Vorrichtung besitzt eine Reihe von Nachteilen. Es ist eine Vielzahl von Komponenten zu montieren und aufzustellen, wobei diese insbesondere bei sehr langen Reinigungslanzen ausgerichtet werden müssen. Nicht nur die Montage ist personalintensiv, sondern auch das Reinigungsverfahren, weil sowohl die xy-Verschiebeeinrichtung als auch die Ständer manuell betätigt werden müssen. Die exakte Ausrichtung der Einzelkomponenten ist erforderlich, damit im Reinigungsbetrieb die Reinigungslanze nicht zu stark auf Biegung beansprucht wird. Außerdem wird dadurch die Vortriebs- und die Rotationseinrichtung ebenfalls beeinträchtigt. Die gesamte Anordnung ist instabil, was zu einer weiteren mechanischen Belastung der Reinigungslanze führt.

Aus der US 2009/0255557 A1 ist eine Reinigungsvorrichtung für Wärmetauscher bekannt, die automatisiert arbeitet. Bei dieser Vorrichtung wird vor dem eigentlichen Reinigungsvorgang die Position sämtlicher zu reinigenden Rohre automatisch beispielsweise mittels eines Laserscanners erfasst. Auf diese Weise reduziert sich der manuelle Aufwand im Vorfeld des Reinigungsprozesses. Informationen über den Verschmutzungsgrad der Rohre liefert diese Vorrichtung nicht.

Aufgabe der Erfindung ist es, ein Reinigungsverfahren anzugeben, das einfach, schnell und zuverlässig durchführbar ist und Informationen über den Verschmutzungsgrad des jeweils zu reinigenden Rohrbündels liefert. Es ist auch Aufgabe eine entsprechende Vorrichtung bereitzustellen.

Diese Aufgabe wird mit einem Verfahren mit den Merkmalen des Anspruchs 1 und mit einer Vorrichtung mit den Merkmalen des Anspruchs 8 gelöst.

Das Verfahren zum Reinigen von Rohren ist dadurch gekennzeichnet, dass die Einschiebtiefe E der rotierenden Reinigungslanze während des Einschiebens der Reinigungslanze in den jeweiligen Rohren des Rohrbündels gemessen wird und dass die Einschiebtiefen E in einer Speicher- und Dokumentationseinrichtung abgespeichert, verarbeitet und dokumentiert werden, wobei für jeden Reinigungsvorgang eines Rohrbündels mindestens die Einschiebtiefen E den jeweiligen Rohren zugeordnet werden und ein dreidimensionales Reinigungsprofil des Rohrbündels erstellt wird.

Das Verfahren hat den Vorteil, dass die Reinigung eines Rohrbündels und die Erfassung des Verschmutzungsgrades der Rohre des Rohrbündels in einem Arbeitsgang durchgeführt werden können. Dies bedeutet nicht nur eine Zeitersparnis, sondern bietet auch die Möglichkeit, nach der Durchführung des Reinigungsvorgangs aufgrund der gewonnenen Daten unmittelbar eine Nachreinigung ausgewählter Rohre anzuschließen.

Die Überwachung der Einschiebtiefe beinhaltet vorzugsweise ein ständiges Beobachten, Messen und/oder Kontrollieren der Einschiebtiefe während des Reinigungsvorgangs, um den Reinigungsfortschritt dokumentieren zu können. Es ist auch möglich, zusätzlich oder ausschließlich die maximal erreichte Einschiebtiefen festzuhalten. Mit dem Begriff Einschieben wird sowohl das Einführen der Reinigungslanze in das Rohr als auch das Durchschieben der Reinigungslanze durch das jeweilige Rohr verstanden.

Die Dokumentation umfasst vorzugsweise die Zuordnung der jeweils gemessenen Einschiebtiefe zum betreffenden Rohr, z.B. zur Rohrnummer oder zum Ort des Rohres, der z.B. über entsprechende X- und Y-Koordinaten definiert ist. Ferner umfasst die Dokumentation vorzugsweise Informationen, ob jedes Rohr angefahren wurde und ob jedes Rohr teilweise oder vollständig gereinigt werden konnte. Durch die Abspeicherung dieser Daten wird die Vollständigkeit der Reinigung dokumentiert.

Das Reinigungsergebnis wird für jedes Rohr dokumentiert, so dass in Verbindung mit den Einschiebtiefen ein drei-dimensionales Reinigungsprofil des Rohrbündels erstellt werden kann. Ein solches Reinigungsprofil hat den Vorteil, dass daraus konstruktive Schwachstellen, z.B. eines Wärmetauschers, abgeleitet werden können, so dass gezielt bauliche Veränderungen am Wärmetauscher vorgenommen werden können, um die Verschmutzung und den Verschmutzungsgrad eines Rohrbündels zukünftig zu verringern.

Aufgrund der Dokumentation ist es für den Anwender nachvollziehbar, ob eine vollständige Reinigung sämtlicher Rohre des Rohrbündels erfolgt ist oder nicht.

Vorzugsweise wird das Reinigungsverfahren teil-oder vollautomatisch durchgeführt. Hierzu weist die erfindungsgemäße Reinigungsvorrichtung eine Steuereinrichtung auf.

Bedienungsfehler sind weitestgehend ausgeschlossen, da von der Steuereinrichtung jedes Rohr des Rohrbündels mit der wenigstens einen Reinigungseinrichtung angefahren wird.

In bevorzugter Ausgestaltung ist vorgesehen, dass das jeweilige Anfahren und die Einschubbewegung der jeweiligen Reinigungseinrichtung von der Steuereinrichtung automatisch oder halbautomatisch anhand von abgespeicherten Geometriedaten der Rohre des Rohrbündels durchgeführt wird. Unter den Geometriedaten der Rohre werden vorzugsweise die Ortskoordinaten der Rohre verstanden. Die Geometriedaten können auch Rohrabstände und/oder Durchmesser und/oder Länge der Rohre und/oder Anzahl der Rohre umfassen.

Da die Ortskoordinaten der Rohre beim Reinigungsvorgang bekannt sind, kann auch das sogenannte Spiegelbild, d.h. die an der Stirnfläche des Rohrbündels erkennbare Anordnung der Rohre, unterschiedlich sein. Es ist möglich, dass die Rohre des Rohrbündels in Gruppen zusammengefasst sind, in denen die Rohrabstände z.B. unterschiedlich sein können, wie dies z.B. bei geteilten Wärmetauschern der Fall ist.

Nach der Positionierung der Reinigungsvorrichtung am stirnseitigen Ende des jeweiligen Rohrbündels kann dann der Reinigungsvorgang vollautomatisch bzw. teilautomatisch erfolgen.

Bei einer halbautomatischen Durchführung des Reinigungsvorgangs werden einige Aufgaben von einer Bedienungsperson übernommen. Darunter wird z.B. das manuelle Anfahren von Referenzpunkten, Referenzrohren oder von Rohrreihen, wie Rohrzeilen oder Rohrspalten, verstanden. Beim manuellen Anfahren oder manuellen Verfahren der Reinigungseinrichtung werden von der Bedienungsperson entsprechende Steuerbefehle in die Steuereinrichtung, vorzugsweise mittels einer Fernbedienung, eingegeben. Die Fernbedienung kann über ein Kabel oder über Funk mit der Steuereinrichtung verbunden sein.

Die voll- oder halbautomatische Reinigung der Rohre hat den weiteren Vorteil, dass die Bedienungsperson entfernt von dem zu reinigenden Rohrbündel, Wärmetauscher etc. stehen kann. Das Bedienungspersonal kann sich außerhalb des Gefahrenbereiches aufhalten und kommt somit mit den Rohrverunreinigungen während des Reinigungsprozesses nicht in Kontakt. Ein Sichtkontakt mit der Stirnfläche des Rohrbündels ist nicht zwingend erforderlich. Anhand der Spülgeräusche weiß die Bedienungsperson, ob sich die Reinigungslanze noch im Rohr befindet oder aus dem Rohr herausgefahren ist, so dass dann z.B. der Befehl zum Weiterfahren und Abspeichern der Daten gegeben werden kann.

Außer den Vorteilen hinsichtlich des Arbeitsschutzes, gibt es auch wirtschaftliche Vorteile. Während beispielsweise bei der manuellen Reinigung eines 6000 Rohre umfassende Rohrbündel bisher zwei Personen zehn Tage lang im Zweischichtbetrieb erforderlich waren, so kann diese Arbeit nach dem erfindungsgemäßen Verfahren in einem Viertel bis einem Drittel des zeitlichen Aufwandes erledigt werden.

Wenn die Geometriedaten des jeweiligen Rohrbündels nicht verfügbar sind, ist nach einer bevorzugten weiteren Ausgestaltung vorgesehen, dass die Geometriedaten der Rohre des Rohrbündels durch manuelles Anfahren der Rohre mit der wenigstens einen Reinigungseinrichtung erfasst werden. Die wenigstens eine Reinigungseinrichtung wird dann von einer Bedienperson durch manuelles Eingreifen in die Steuereinrichtung nacheinander an allen Rohren des Rohrbündels positioniert, ohne dass die Reinigungslanze in die Rohre eingeschoben wird.

Die geometrische Position sämtlicher Rohre des Rohrbündels wird erfasst und abgespeichert, so dass für den späteren Reinigungsvorgang oder die Reinigungsvorgänge in der Zukunft die Geometriedaten zur Verfügung stehen.

Um die Reinigungszeit weiter zu verringern, ist bevorzugt vorgesehen, dass eine Reinigungsvorrichtung mit mehreren Reinigungseinrichtungen verwendet wird, deren Reinigungslanzen gleichzeitig in benachbarte Rohre eingeschoben werden, wobei die Einschiebtiefen E der Reinigungslanzen unabhängig voneinander gemessen und abgespeichert werden.

Vorzugsweise wird die Messung der Einschiebtiefe mittels einer dritten Antriebseinrichtung einer Vortriebseinrichtung der Reinigungslanze durchgeführt.

Die Messung der Einschiebtiefe wird z.B. durch Auswertung z. B. der Anzahl der Umdrehungen der Antriebswelle unter Berücksichtigung des Umfangs eines Antriebsrades für die Reinigungslanze ermittelt werden. Die Einschiebtiefe kann auf diese Weise mit hoher Genauigkeit ermittelt werden.

Vorzugsweise erfolgt die Messung der Einschiebtiefe mittels eines Servomotors der Vortriebseinrichtung.

Vorzugsweise kann gemäß einer weiteren Ausführungsform die Messung der Einschiebtiefe über ein Abtasten von an oder in der Reinigungslanze angebrachter Messmarkierungen erfolgen.

Vorzugsweise wird das Drehmoment der dritten Antriebseinrichtung der Vortriebseinrichtung während des Einschiebens der Reinigungslanze in das Rohr - kontinuierlich oder diskontinuierlich - gemessen und die gemessenen Drehmomentwerte D werden zusammen mit den jeweiligen Einschiebtiefen E in der Speicher- und Dokumentationseinrichtung abgespeichert und einander zugeordnet. Aus den Drehmomentwerten D kann auf den Grad der Verschmutzung des betreffenden Rohres geschlossen werden.

Vorzugsweise wird während des Einschiebens bei einem Anstieg des Drehmomentes der Antriebseinrichtung über einen vorgegebenen Wert Dv die Antriebseinrichtung z. B. abgeschaltet, in einen Freispülmodus, in den Rücklauf oder in einen Rüttelmodus geschaltet. Wenn das Drehmoment während des Einschiebens über den vorgegebenen Wert Dv ansteigt und nicht wieder auf den Normalwert abfällt, kann das Hindernis nicht oder nicht ohne weiteres beseitigt werden und der Reinigungsvorgang sollte an dieser Stelle zunächst abgebrochen werden, um die Antriebseinrichtung der Vortriebseinrichtung und/oder die am vorderen Ende der Reinigungslanze angeordnete Austrittsdüse nicht zu beschädigen.

Die dritte Antriebseinrichtung kann alternativ in einen Freispülmodus geschaltet werden, in dem die Lanzenspitze für eine vorgegebene Zeitspanne vor dem Hindernis angehalten wird, das Hindernis mit dem unter Druck stehenden Reinigungsfluid besprüht wird und nach Ablauf der Zeitspanne der Hochdruckschlauch weiter vorgeschoben wird. Durch diese Maßnahme kann das Hindernis unter Umständen weggespült werden, so dass der Reinigungsvorgang planmäßig in diesem Rohr zu Ende geführt werden kann.

Die Antriebseinrichtung kann in solchen Fällen auch sofort in den Rücklauf geschaltet werden, um die Reinigungslanze aus dem Rohr herauszufahren.

Es besteht auch die Möglichkeit, die Antriebseinrichtung in einen Rüttelmodus zu schalten, so dass die Reinigungslanze mehrmals vor und zurück gefahren wird, wodurch das Hindernis mechanisch bearbeitet und ggf. so zerkleinert werden kann, dass der Vorschub fortgesetzt werden kann.

Auch diese Daten werden vorzugsweise in der Speicher- und Dokumentationseinrichtung festgehalten.

Vorzugsweise werden vor dem erstmaligen Einschieben der wenigstens einen Reinigungslanze in die Rohre die Ausrichtung der Reinigungsvorrichtung bezüglich es Rohrbündels ermittelt und die ermittelten Daten in der Steuereinrichtung abgespeichert und bei der Korrektur des Verfahrweges der Reinigungseinrichtung berücksichtigt.

Die Ausrichtung der Reinigungseinrichtung betrifft vorzugsweise die Ausrichtung der Verschiebeeinrichtung bezüglich der Rohrreihen, d. h. der Rohrzeilen oder Rohrspalten, wobei ein sogenannter Winkelversatz auftreten kann. Durch die Berücksichtigung des Winkelversatzes wird die Anfahrgenauigkeit und somit die Zuverlässigkeit der Reinigungsvorrichtung weiter erhöht. Eine mechanische Justierung der Verschiebeeinrichtung kann dadurch entfallen.

Vorzugsweise wird mindestens das erste zu reinigende Rohr des Rohrbündels manuell angefahren.

Vorzugsweise wird die Reinigungslanze mit einer konstanten Vorschubgeschwindigkeit in die Rohre eingeschoben. Die Vorschubgeschwindigkeit kann vorzugsweise frei gewählt werden.

Das gleichmäßige Durchfahren der Rohre hat den Vorteil, dass der Reinigungsprozess überall mit derselben Vorschubgeschwindigkeit und dadurch mit derselben Qualität durchgeführt wird. Es gibt dadurch keine Reinigungssprünge, die auch zu einer Verfälschung der Verschmutzungsdaten führen könnten.

Die erfindungsgemäße Reinigungsvorrichtung zum Reinigen von Rohren weist eine XY-Verschiebeeinrichtung, mindestens eine Reinigungseinrichtung und mindestens eine Trägerschiene auf. Die Reinigungseinrichtung ist an der XY-Verschiebeeinrichtung angeordnet und weist eine Reinigungslanze sowie eine Rotationseinrichtung zum Rotieren der Reinigungslanze und eine Verschiebeeinrichtung zum Ein- und Ausfahren der Reinigungslanze auf. Die Trägerscheine dient zur Abstützung der Reinigungslanze. Die Reinigungsvorrichtung ist dazu eingerichtet, das erfindungsgemäße Verfahren auszuführen. Die Reinigungseinrichtung weist eine Messeinrichtung zur Messung von Einschiebtiefen E der Reinigungslanze in den Rohren sowie eine mit der Messeinrichtung verbundene Speicher- und Dokumentationseinrichtung auf.

Eine Reinigungslanze weist ein Lanzenrohr, vorzugsweise ein Metallrohr, sowie eine Austrittsdüse auf, die am vorderen in das zu reinigende Rohr einschiebbaren Ende des Lanzenrohres angeordnet ist. Anstatt eines Metallrohres kann für das Lanzenrohr auch ein anderes steifes Material z.B. ein Kunststoffmaterial verwendet werden, wobei zu berücksichtigen ist, dass das Rohrmaterial einem Druck des Reinigungsfluids von 25 bar bis 3000 bar standhalten muss. Da die Reinigungslanze rotiert ist es vorteilhaft, an der Austrittsdüse oder am vorderen Ende des Lanzenrohrs zusätzlich ein Schneidmittel vorzusehen, um auf einfache Weise Verkrustungen innerhalb des zu reinigenden Rohres zu lösen.

Die Austrittsdüse kann eine oder mehrere Austrittsöffnungen aufweisen. Auch kann die Austrittsdüse relativ zum Lanzenrohr rotierbar angeordnet sein, beispielswiese durch das durch das Lanzenrohr durchfließende Reinigungsfluid angetrieben werden.

Die Reinigungslanze weist eine Länge auf, die vorzugsweise größer als die Rohrlänge der zu reinigenden Rohre ist. Eine Reinigungslanze kann z.B. eine Länge von bis zu 6m aufweisen.

Der Vorteil der Reinigungsvorrichtung besteht darin, dass mittels der Messeinrichtung in Kombination mit der Speicher- und Dokumentationseinrichtung die Erfassung und Verarbeitung von Verschmutzungsdaten der jeweiligen Rohre auf einfache Weise möglich ist, so dass für jedes Rohrbündel der Verschmutzungsgrad im Detail festgehalten werden kann. Der Reinigungsvorgang geht mit einer Erfassung und Auswertung der Verschmutzungsdaten einher, wodurch Zeit im Vergleich zu einer separaten Ermittlung der Verschmutzungsdaten vor dem eigentlichen Reinigungsvorgang eingespart wird.

Vorzugsweise ist die Speicher- und Dokumentationseinrichtung zur Ablage, Verarbeitung, Aufbereitung und Auswertung von während des Betriebs der Reinigungsvorrichtung anfallender Daten und/oder eingegebener Daten ausgebildet. Damit ist nicht nur eine vollständig detaillierte Erfassung des Verschmutzungsgrades, sondern auch eine teil- oder vollautomatische Durchführung des Reinigungsverfahrens möglich. Die in der Speicher- und Dokumentationseinrichtung abgelegten Geometriedaten, z.B. die XY-Koordinaten, ermöglichen daher ein automatisches Anfahren aller zu reinigenden Rohre sowie im Fall einer Nachreinigung auch das automatische Anfahren der aufgrund der Verschmutzungsdaten ausgewählten Rohre.

Zu diesem Zweck ist die Speicher- und Dokumentationseinrichtung vorzugsweise mit einer Steuereinrichtung der Reinigungsvorrichtung verbunden. Die Speicher- und Dokumentationseinrichtung kann auch in der Steuereinrichtung integriert sein.

Vorzugsweise sind mehrere Reinigungseinrichtungen mit eigener Vortriebseinrichtung und eigener Rotationseinrichtung vorgesehen, wobei jede Reinigungseinrichtung mit einer eigenen Messeinrichtung ausgerüstet ist. Durch den Einsatz zwei oder mehrerer Reinigungseinrichtungen wird die Reinigungszeit und die Zeit für die Datenerfassung deutlich verkürzt.

Vorzugsweise weist die XY-Verschiebeeinrichtung eine erste und eine zweite Antriebseinrichtung für die Verstellung in X- und Y-Richtung auf, die ebenfalls an die Steuereinrichtung angeschlossen sind.

Auch die Vortriebseinrichtung weist vorzugsweise eine dritte Antriebseinrichtung auf, die an die Steuereinrichtung angeschlossen ist. Damit wird eine automatische Durchführung der Rohrreinigung ermöglicht.

Die Messeinrichtung zur Messung der Einschiebtiefe kann beispielsweise in der Antriebseinrichtung der Vortriebseinrichtung angeordnet oder integriert sein, indem z.B. die Anzahl der Rotationen der Antriebswelle de Antriebseinrichtung gemessen wird. In dieser Ausführungsform ist die Antriebswelle auch Bestandteil dieser Messeinrichtung.

Die Messeinrichtung weist vorzugsweise Messmarkierungen und mindestens eine die Messmarkierungen erfassenden Messsensor auf, wobei die Messmarkierungen an der Reinigungslanze oder einer sich bewegenden Komponente der Vortriebseinrichtung angeordnet sind.

Beispielsweise kommen Messsensoren für eine Magnetabtastung, eine Ultraschallabtastung oder auch die Messung Ohm'scher, induktiver oder kapazitiver Widerstände oder für eine optische Messung in Betracht. Auch Wirbelstromsensoren können eingesetzt werden, welche berührungslos verschleißfreie Messmarkierungen auf metallischen Reinigungslanzen äußerst hochauflösend messen können.

Gemäß einer besonderen Ausführungsform sind die Messmarkierungen an einem Antriebsrad der Vortriebseinrichtung vorgesehen. Die Messung der Einschiebtiefe kann z.B. durch Auswertung der Anzahl der Umdrehungen eines Antriebsrades unter Berücksichtigung des Umfangs des Antriebsrades erfolgen.

Vorzugsweise weist die Vortriebseinrichtung mindestens einen Servomotor auf, der das Antriebsrad antreibt. Als Servomotor werden Elektromotoren verstanden, die die Kontrolle der Winkelposition der Motorwelle sowie der Drehgeschwindigkeit und der Beschleunigung erlauben. Servomotoren weisen in der Regel einen Sensor zur Positionsbestimmung der Motorwelle auf, der als Messsensor der Messeinrichtung genutzt werden kann. Die vom Sensor ermittelte Drehposition der Motorwelle wird an eine Regelelektronik übermittelt, die als Servoregler bezeichnet wird. Der Servomotor hat den Vorteil, dass aufgrund seiner Bauweise Komponenten des Servomotors für die Messung der Einschiebtiefe genutzt werden können. Die Messeinrichtung ist vorzugsweise zumindest teilweise in den Servomotor integriert.

Vorzugsweise weist die Vortriebseinrichtung eine Drehmomentmesseinrichtung für die Messung des Drehmomentes der dritten Antriebseinrichtung auf. Die Vorteile der Drehmomentmessung werden im Zusammenhang mit dem Reinigungsverfahren erläutert. Die Drehmomentmesseinrichtung kann, insbesondere bei Verwendung eines Servomotors, im Servomotor integriert sein.

Vorzugsweise ist die Vortriebseinrichtung an der Trägerschiene befestigt.

Vorzugsweise umfasst die Vortriebseinrichtung Antriebsmittel, wie z.B. einen Antriebsriemen oder eine Antriebsspindel.

Vorzugsweise ist die Rotationseinrichtung der Reinigungslanze verschiebbar auf der Trägerschiene angeordnet, wobei die Vortriebseinrichtung an der Rotationseinrichtung angreift. Die Rotationseinrichtung und die Trägerschiene bilden vorzugsweise eine Profilschienenführung. Beispielsweise ist die Rotationseinrichtung an dem Antriebsriemen befestigt.

Die Rotationseinrichtung ist vorzugsweise am hinteren Ende der Rotationslanze angeordnet. Die Reinigungslanze ist in der Rotationseinrichtung vorzugsweise in Längsrichtung der Reinigungslanze fixiert, so dass durch ein Verschieben der Rotationseinrichtung die Reinigungslanze ebenfalls verschoben wird. Diese Anordnung hat den Vorteil, dass ein axiales Verschieben der Reinigungslanze innerhalb der Rotationseinrichtung nicht erforderlich ist, wie dies bei ortsfest montieren Rotationseinrichtungen der Fall ist. Der konstruktive Aufwand für die Rotationseinrichtung wird dadurch vereinfacht. Außerdem kann die Rotationseinrichtung auch eine Drehdurchführung zum Anschluss des Versorgungsschlauchs oder Versorgungsrohrs aufweisen.

Die vierte Antriebseinrichtung der Rotationseinrichtung ist vorzugsweise an die Steuereinrichtung angeschlossen. Die vierte Antriebseinrichtung greift an der Reinigungslanze an und versetzt die Reinigungslanze in Rotation.

Zur Verkürzung der Reinigungszeit ist vorgesehen, dass mehrere parallele Reinigungseinrichtungen mit eigener Vortriebseinrichtung und/oder eigener Rotationseinrichtung vorgesehen sind, wobei jede Reinigungseinrichtung mit einer eigenen Messeinrichtung ausgerüstet sein kann.

Die Trägerschiene ist bei dieser Ausführungsform entsprechend zur Aufnahme von zwei oder mehreren Reinigungseinrichtungen auszulegen. Es ist auch möglich, mehrere Trägerschienen vorzusehen und diese an der XY-Verschiebeeinrichtung anzuordnen.

Vorzugsweise weist die XY-Verschiebeeinrichtung Befestigungsmittel zum Befestigen an dem Rohrbündel auf. Vorzugsweise sind diese Mittel so ausgelegt, dass die Verschiebeeinrichtung ausschließlich an dem Rohrbündel befestigt werden kann.

Dies hat den Vorteil, dass die Verschiebeeinrichtung keine weiteren Gestelle oder dergleichen oder einen Reinigungswagen benötigt, auf dem die Verschiebeeinrichtung montiert ist. Die XY-Verschiebeeinrichtung und damit die gesamte Reinigungsvorrichtung ist somit kompakt und benötigt nur einen geringen Platzbedarf. Außerdem ist die Vorrichtung in kurzer Zeit an dem zu reinigenden Rohrbündel montierbar.

Ein weiterer Vorteil dieser Ausführungsform besteht darin, dass die wenigen Komponenten der XY-Verschiebeeinrichtung den Transport der Vorrichtung erleichtern. Die Lage des zu reinigenden Rohrbündels bzw. Wärmetauschers kann beliebig sein. Der Vorteil der Verschiebeeinrichtung besteht darin, dass sie sowohl an liegenden als auch an stehenden Rohrbündeln auf einfache Weise befestigt werden kann. Die Reinigung der Rohrbündel ist somit nicht von der Lage des Rohrbündels abhängig.

Vorzugsweise ist die Trägerschiene an der XY-Verschiebeeinrichtung befestigt. Es wird dadurch eine kompakte Anordnung geschaffen, wobei die Tragschiene nicht bezüglich der XY-Verschiebeeinrichtung ausgerichtet werden muss, wie dies beim Stand der Technik erforderlich ist. Die Montage wird dadurch erheblich vereinfacht. Die Trägerschiene ist vorzugsweise an einer der Führungsschienen der XY-Verschiebeeinrichtung befestigt, insbesondere an der zweiten Führungsschiene. Die Trägerschiene erstreckt sich in Z-Richtung und steht somit senkrecht auf der durch die beiden Führungsschienen aufgespannten XY-Ebene.

Die XY-Verschiebeeinrichtung weist mindestens eine erste sich in X-Richtung erstreckende Führungsschiene und mindestens eine zweite sich in Y-Richtung erstreckende Führungsschiene auf, wobei die Trägerschiene an der zweiten Führungsschiene in Y-Richtung verschiebbar angeordnet ist.

Die Trägerschiene ist vorzugsweise länger als die Reinigungslanze.

Die Führungsschienen bestehen vorzugsweise aus einem biegesteifen Profil und können beispielsweise mit Zahnstangen ausgerüstet sein, an denen die ersten und zweiten Antriebseinrichtungen zum Verfahren der Reinigungseinrichtung angreifen können.

Vorzugsweise weist die erste Führungsschiene die Mittel zum Befestigen an dem Rohrbündel auf und die zweite Führungsschiene ist längs der ersten Führungsschiene verfahrbar an der ersten Führungsschiene angeordnet. Die erste Führungsschiene ist somit ortsfest an dem Rohrbündel befestigt und lediglich die zweite Führungsschiene ist bezüglich der ersten Führungsschiene verfahrbar. Vorzugsweise ist die Reinigungseinrichtung verfahrbar an der zweiten Führungsschiene angeordnet.

Vorzugsweise ist eine Abstützeinrichtung vorgesehen, die die Trägerschiene abstützt. Die Abstützeinrichtung ist vorzugsweise nur dann erforderlich, wenn Reinigungslanzen mit einer Länge >2,5 m zum Einsatz kommen.

Die Abstützeinrichtung ist gemäß einer besonderen Ausführungsform eine Aufhängung. Die Aufhängung kommt zum Einsatz, wenn horizontal angeordnete Rohrbündel zu reinigen sind und die Reinigungslanze ebenfalls horizontal ausgerichtet sein muss.

Die Aufhängung weist vorzugsweise Aufhängemittel auf, die am hinteren der XY-Verschiebeeinrichtung abgewandten Ende der Trägerschiene befestigt sind. Die Trägerschiene ist somit nur an zwei Punkten, nämlich am vorderen Ende und am hinteren Ende fixiert, was die Montage vereinfacht und eine stabile Anordnung gewährleistet.

Vorzugsweise sind die Aufhängemittel parallel zur ersten Führungsschiene in X-Richtung verfahrbar. Zum horizontalen Verfahren der Aufhängemittel kann auf eine Antriebseinrichtung verzichtet werden. Die Aufhängemittel sind vorzugsweise frei verfahrbar, d.h. antriebslos angeordnet. Wenn eine horizontale Verschiebung der Reinigungseinrichtung mittels der XY-Verschiebeeinrichtung durchgeführt wird und auch die Trägerschiene horizontal damit verschoben wird, werden die Aufhängemittel automatisch nachgefahren.

Vorzugsweise sind die Aufhängemittel parallel zur zweiten Führungsschiene in Y-Richtung mittels einer fünften Antriebseinrichtung bewegbar.

Die fünfte Antriebseinrichtung ist vorzugsweise ebenfalls an die Steuereinrichtung angeschlossen, um eine automatische Durchführung des Reinigungsverfahrens zu ermöglichen.

Die fünfte Antriebseinrichtung wird dann benötigt, wenn an der XY-Verschiebeeinrichtung eine vertikale Verschiebung der Reinigungseinrichtung durchgeführt wird.

Gemäß einer weiteren Ausführungsform ist die Abstützeinrichtung eine Versteifungseinrichtung. Wenn aufrechtstehende Rohrbündel gereinigt werden sollen, ragt die Tragschiene senkrecht nach oben. Dadurch ist vorzugsweise anstatt einer Aufhängung eine Versteifungseinrichtung als Abstützeinrichtung vorgesehen.

Beispielhafte Ausführungsformen der Erfindung werden nachfolgend anhand der Zeichnungen näher erläutert. Es zeigen:
- Fig. 1: eine Seitenansicht der Reinigungsvorrichtung mit nicht eingefahrener Reinigungslanze,
- Fig. 2: die Seitenansicht gemäß der Figur 1 mit in ein Rohr des Rohrbündels eingefahrener Reinigungslanze,
- Fig. 3: eine Draufsicht auf die in Figur 1 und 2 dargestellte Reinigungsvorrichtung,
- Fig. 4: ein Blockschaltbild zur Erläuterung der Verknüpfung der verschiedenen Antriebseinrichtungen mit der Steuereinrichtung und der Speicher- und Dokumentationseinrichtung,
- Fig. 5: einen Vertikalschnitt längs der Linie A-A in Figur 1,
- Fig. 6: eine Detailansicht der Vortriebseinrichtung,
- Fig. 7: eine Draufsicht auf das stirnseitige Ende des Rohrbündels mit einer Verschiebeeinrichtung gemäß einer Ausführungsform,
- Fig. 8: eine weitere Ausführungsform der Reinigungsvorrichtung in Seitenansicht für ein aufrecht stehendes Rohrbündel,
- Fig. 9: eine Draufsicht auf die in Figur 8 gezeigte Reinigungsvorrichtung,
- Fign. 10+11: zwei unterschiedliche Verkrustungssituationen in einem Rohr mit dazugehörigen Drehmomentdiagrammen eines Servomotors.

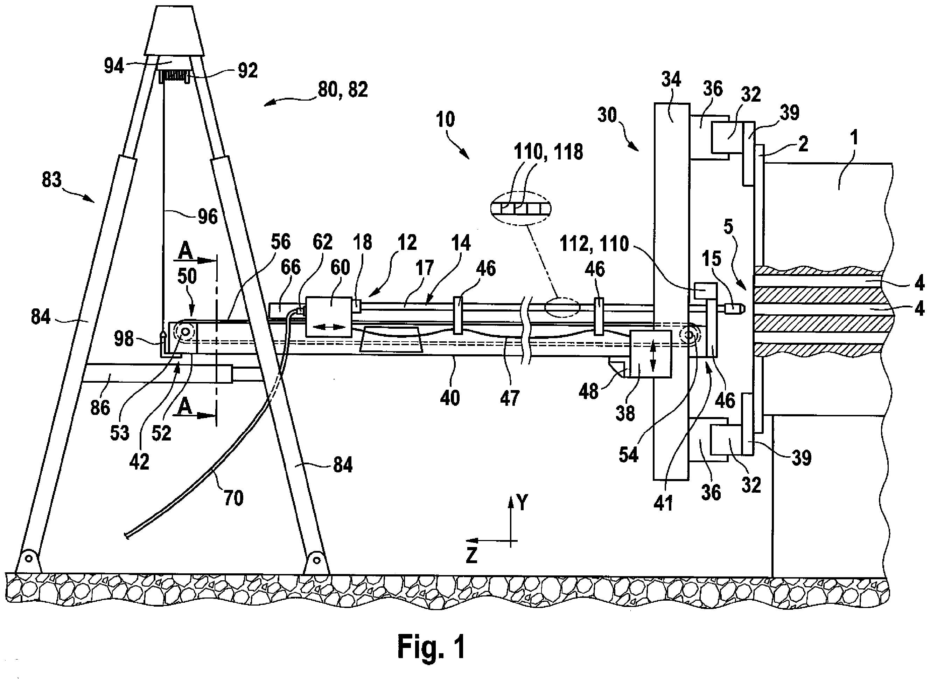

In der Figur 1 ist ein horizontal angeordnetes Rohrbündel 1 teilweise im Schnitt dargestellt, so dass die Einzelrohre 4 des Rohrbündels 1 zu sehen sind. Es kann sich hierbei beispielsweise um ein Rohrbündel eines Wärmetauschers, eines Luftkühlers oder eines Kondensators handeln. Das Rohrbündel 1 weist ein offenes Ende 5 auf, so dass von dort aus das Innere der parallel angeordneten Rohre 4 zur Reinigung zugänglich ist.

Vor dem offenen Ende 5 des Rohrbündels 1 ist eine Reinigungsvorrichtung 10 angeordnet, die wenigstens eine Reinigungseinrichtung 12, eine XY-Verschiebeeinrichtung 30, eine Trägerschiene 40, einen Versorgungsschlauch 70, der an eine Hochdruckeinrichtung (nicht dargestellt) zur Bereitstellung eines Reinigungsfluids angeschlossen ist, sowie eine Abstützeinrichtung 80 aufweist.

Die Reinigungseinrichtung 12 umfasst eine Reinigungslanze 14, eine Vorschubeinrichtung 50 und eine Rotationseinrichtung 60.

Die XY-Verschiebeeinrichtung 30 ist direkt an einem Flansch 2 des Rohrbündels 1 befestigt. Ein solcher Flansch 2 ist an der Stirnseite des Rohrbündels 1 vorgesehen, um dort einen Deckel (nicht dargestellt) zu befestigen. Nach Abnahme des Deckels kann dieser Flansch 2 zur Befestigung der XY-Verschiebeeinrichtung 30 genutzt werden.

Die XY-Verschiebeeinrichtung 30 weist zwei horizontal, d.h. sich in X-Richtung erstreckende erste Führungsschienen 32 sowie eine vertikal, d.h. sich in Y-Richtung erstreckende zweite Führungsschiene 34 auf. Die erste Führungsschiene 32 ist über Befestigungsmittel 39 am Flansch 2 des Rohrbündels 1 angeordnet.

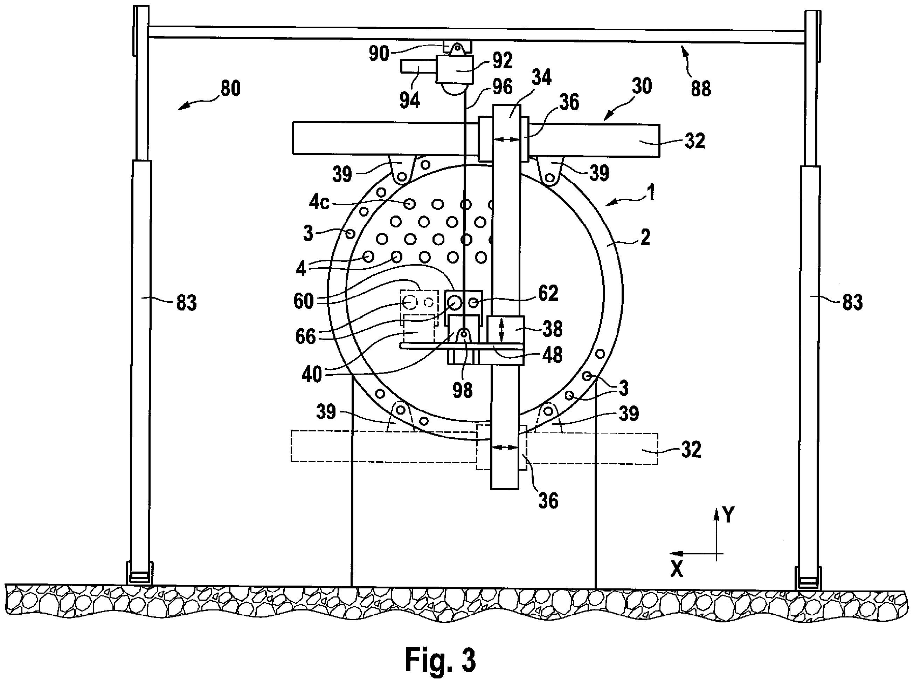

Mittels zweier erster Antriebseinrichtungen 36, die auch einen Fahrwagen umfassen, ist die zweite Führungsschiene 34 in X-Richtung verfahrbar an der ersten Führungsschiene 32 angeordnet (siehe hierzu auch die Figur 3). An der zweiten Führungsschiene 34 ist die Trägerschiene 40 angeordnet, die sich in Z-Richtung erstreckt und senkrecht zur zweiten Führungsschiene 34 ausgerichtet ist. Diese Trägerschiene 40 ist mittels einer zweiten Antriebseinrichtung, die ebenfalls einen Fahrwagen umfasst, längs der zweiten Führungsschiene Y verfahrbar.

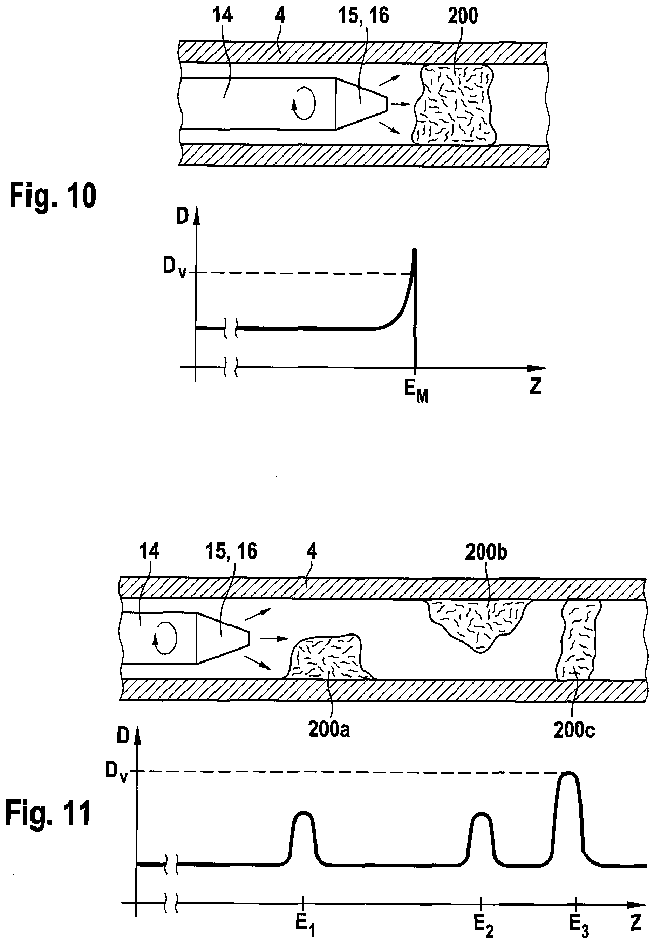

Auf der Trägerschiene 40 ist eine Reinigungseinrichtung 12 angeordnet, die die Reinigungslanze 14 umfasst, die ein Lanzenrohr 17 aufweist, an dessen vorderen Ende eine Lanzenspitze 15 angeordnet ist. Die Lanzenspitze 15 umfasst eine Austrittsdüse 16 (s. Figur 10 und 11) und ein nicht dargestelltes Reinigungswerkzeug. Die Lanzenspitze 15 ist vor einem Rohr 4 eingezeichnet.

An dem der Lanzenspitze 15 gegenüberliegenden Ende der Reinigungslanze 14 ist ein Anschlussende 18 vorgesehen, mit dem die Reinigungslanze 14 an einer Rotationseinrichtung 60 angeschlossen wird. Mittels dieser Rotationseinrichtung 60, die über eine vierte Antriebseinrichtung 66 verfügt, wird die Reinigungslanze 14 in Rotation versetzt. An der gegenüberliegenden Seite der Rotationseinrichtung 60 befindet sich eine Drehdurchführung 62, an die der Versorgungsschlauch 70 für die Zuführung von Reinigungsfluid zur Reinigungslanze 14 angeschlossen ist.

Die Rotationseinrichtung 60 ist auf der Trägerschiene 40 verfahrbar angeordnet. Angetrieben wird die Rotationseinrichtung von einer Vortriebseinrichtung 50, die am hinteren Ende 42 der Trägerschiene 40 eine dritte Antriebseinrichtung 52 aufweist. Die dritte Antriebseinrichtung 52 treibt ein Antriebsrad 53 an, das einen Antriebsriemen 56, insbesondere ein Zahnriemen, antreibt. Am vorderen Ende 41 der Trägerschiene 40 ist eine Umlenkrolle 54 vorgesehen. Der Antriebsriemen 56 verläuft innerhalb der als Hohlprofil ausgebildeten Trägerschiene 40 und oberhalb der Trägerschiene 40.

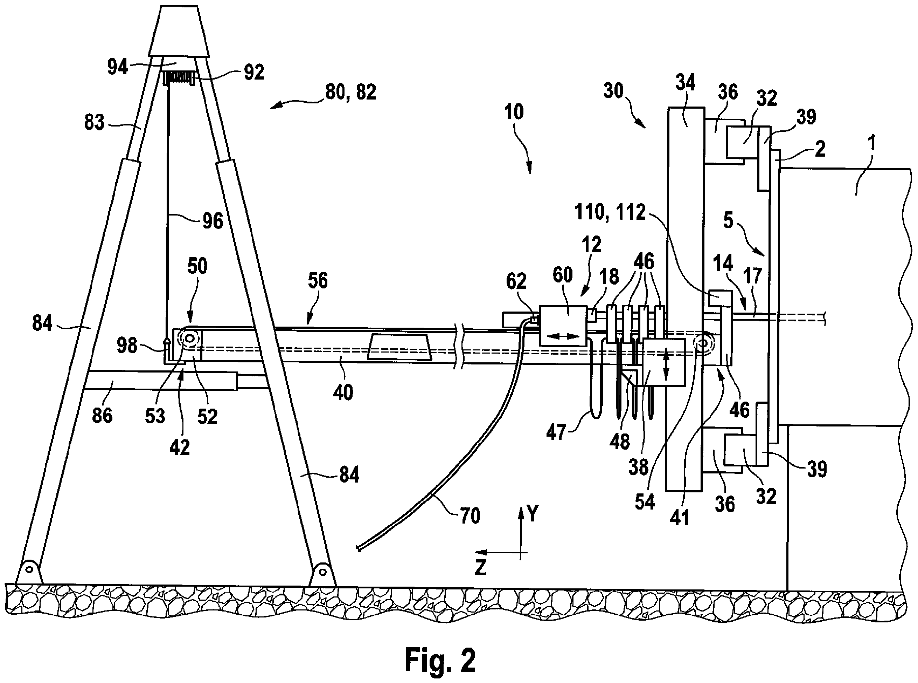

Die Rotationseinrichtung 60 ist an dem Antriebsriemen 56 befestigt und kann somit längs der Trägerschiene 40 in Z-Richtung verfahren werden, so dass die Reinigungslanze 14 in das Rohr 4 eingefahren werden kann, wie dies in der Figur 2 dargestellt ist.

Zur Abstützung der Reinigungslanze 14 sind Lanzenführungselemente 46 auf der Trägerschiene 40 vorgesehen. Das Lanzenführungselement 46 am vorderen Ende 41 der Trägerschiene 41 ist ortsfest angeordnet, während die beiden anderen dargestellten Lanzenführungselemente 46 verschiebbar auf der Trägerschiene 40 angeordnet sind. Die Lanzenführungselemente 46 sind über ein flexibles Verbindungselement 47, wie z.B. einem Seil, miteinander verbunden. Beim Einfahren der Reinigungslanze 14 (Figur 2) werden die Lanzenführungselemente 46 zusammengeschoben und beim Herausfahren werden die Lanzenführungselemente 46 wieder auseinandergefahren und im Abstand zueinander positioniert.

Am hinteren Ende 42 der Trägerschiene 40 greift eine Abstützeinrichtung 80 an. Diese Abstützeinrichtung 80 ist in der hier gezeigten Ausführungsform als Aufhängung 82 ausgeführt. Diese Aufhängung 82 umfasst zwei Stützböcke 83, die über eine Traverse 88, die als Laufschiene ausgebildet ist, miteinander verbunden sind.

Jeder Stützbock 83 besitzt zwei teleskopartig ausfahrbare Stützstreben 84, die über eine ebenfalls teleskopartig ausfahrbare Stützbocktraverse 86 miteinander verbunden sind.

Wie der Figur 3 zu entnehmen ist, ist an der Traverse 88 bzw. der Laufschiene 88 eine Laufkatze 90 frei verfahrbar angeordnet, die eine Seilwinde 92 mit einer fünften Antriebseinrichtung 94 aufweist. An dieser Seilwinde 92 ist ein Aufhängemittel 96 in Form eines Seils angeordnet, an dessen unterem Ende eine Halterung 98 befestigt ist, die am hinteren Ende 42 der Trägerschiene 40 angreift.

Wenn eine horizontale Verschiebung der Reinigungseinrichtung 12 mittels der XY-Verschiebeeinrichtung 30 vorgenommen wird, wird die Laufkatze 90 durch das Seil 96 und durch die entsprechende Bewegung des hinteren Endes 42 der Trägerschiene 40 in die entsprechende Position gezogen. Wenn eine Y-Verschiebung an der XY-Verschiebeeinrichtung 30 vorgenommen wird, wird die fünfte Antriebseinrichtung 94 angesteuert, so dass das Seil 96 entsprechend hochgezogen oder abgelassen wird.

Außerdem ist in der Figur 3 die Draufsicht auf die in Figur 1 dargestellte Reinigungsvorrichtung 10 zu sehen. Die untere erste Führungsschiene 32 ist gestrichelt dargestellt, da diese nur optional Verwendung findet. Wenn die Reinigungslanze nur eine geringe Länge aufweist, so dass auch die Trägerschiene 40 kürzer ausgestaltet werden kann, ist die untere erste Führungsschiene 32 nicht erforderlich. Bei langen Reinigungslanzen und dementsprechend langen Trägerschienen 40 ist es aus Stabilitätsgründen bevorzugt, diese zweite erste Führungsschiene 32 vorzusehen und diese ebenfalls mit Befestigungsmitteln 39 an Befestigungsöffnungen 3, die für die Befestigung des Deckels vorgesehen sind, am Flansch 2 des Rohrbündels 1 zu befestigen.

Die Trägerschiene 40 ist mittels eines Verbindungselementes 48 mit dem Fahrwagen der zweiten Antriebseinrichtung 38 verbunden. Die Rotationseinrichtung 60 weist eine vierte Antriebseinrichtung 66 beispielsweise in Gestalt eines Luftmotors auf. 62 bezeichnet die Drehdurchführung.

Neben der Rotationseinrichtung 60 ist eine weitere Rotationseinrichtung 60 gestrichelt dargestellt. Auch die Trägerschiene 40 ist gestrichelt eingezeichnet, um zu verdeutlichen, dass auch zwei Reinigungseinrichtungen 12 nebeneinander auf dem Verbindungselement 48 angeordnet sein können.

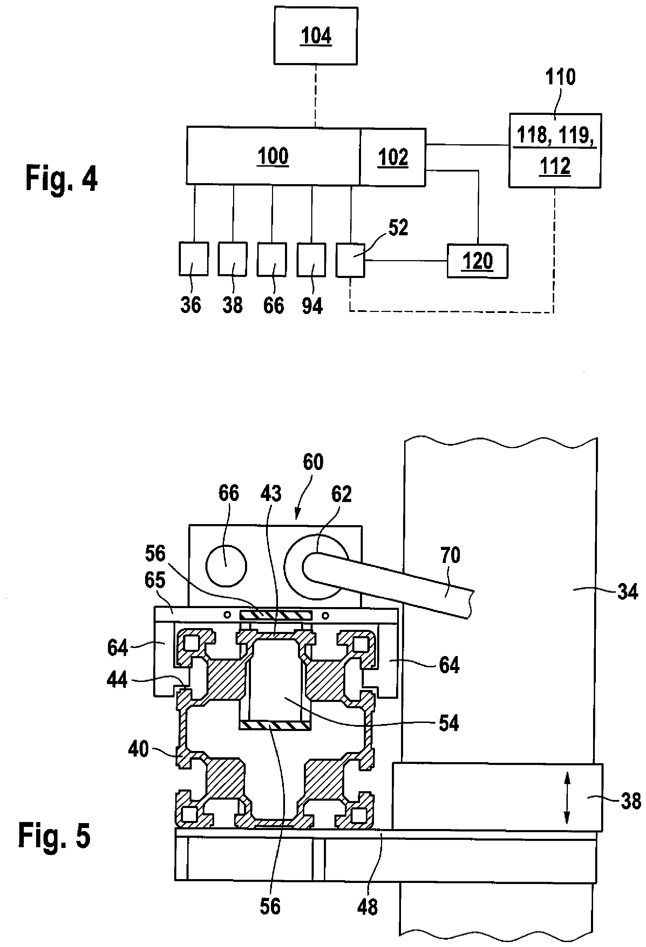

In Figur 4 ist ein Blockschaltbild dargestellt, das zeigt, wie die einzelnen Antriebseinrichtungen mit einer Steuereinrichtung 100 und einer Speicher- und Dokumentationseinrichtung 102 verknüpft sind. Die Steuereinrichtung 100 ist mit allen fünf Antriebseinrichtungen 36, 38, 52, 60 und 94 verbunden und kann mittels einer Fernbedienung 104 betätigt werden.

Die Speicher- und Dokumentationseinrichtung 102 kann eine eigenständige Einrichtung sein, sie kann aber auch integraler Bestandteil der Steuereinrichtung 100 sein. Die dritte Antriebseinrichtung 52 der Vortriebseinrichtung 50 kann an einer Drehmomentmesseinrichtung 120 angeschlossen sein. Diese Drehmomenteinrichtung 120 ist ebenfalls an die Speicher- und Dokumentationseinrichtung 102 angeschlossen.

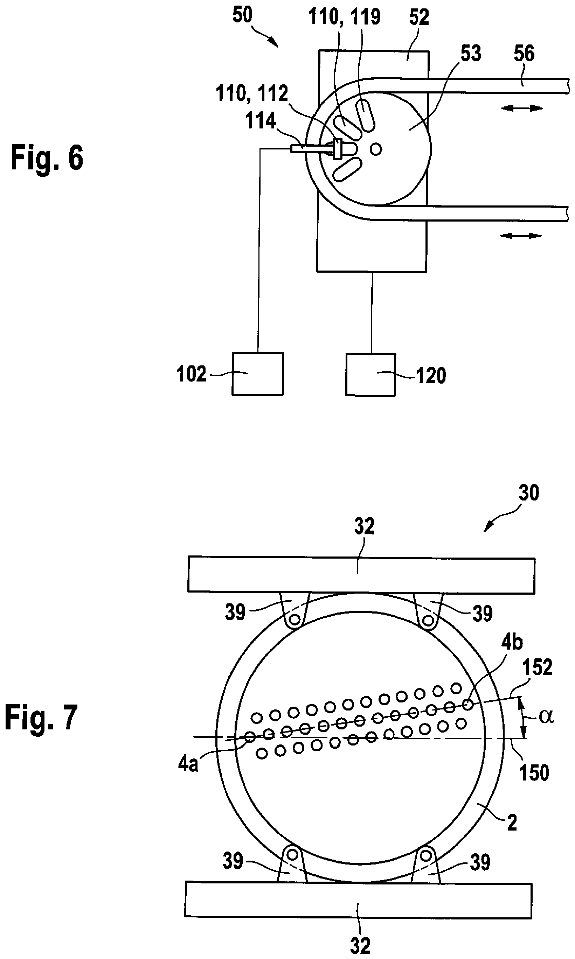

Eine Messeinrichtung 110 zur Messung der Einschiebtiefe ist ebenfalls an die Speicher- und Dokumentationseinrichtung 102 angeschlossen. Diese Messeinrichtung kann gemäß der in Figur 1 dargestellten Ausführungsform Messmarkierungen 118 auf der Reinigungslanze 14 umfassen, die mit einem an dem vorderen Lanzenführungselement 46 befestigten Messsensor 112 z.B. optisch erfasst werden können. Durch Abzählen der Messmarkierungen 118 beim Einschieben der Reinigungslanze 14 am Rohr 4 wird die Einschiebtiefe E gemessen. In der Figur 6 ist eine weitere Ausführungsform der Messeinrichtung 110 dargestellt.

In der Figur 5 ist ein Schnitt längs der Linie A-A durch die in der Figur 1 dargestellte Reinigungsvorrichtung 10 zu sehen, um die Profilschienenführung von Rotationseinrichtung 60 und Trägerschiene 40 zu erläutern. Die Trägerschiene 40 ist als Hohlprofil ausgeführt, wobei innerhalb des Hohlprofils der Antriebsriemen 56 läuft, der über die Umlenkrolle 54 nach oben geführt und dort oberhalb des Schenkels 43 des Hohlprofils geführt wird. Die Rotationseinrichtung 60 weist Schienenelemente 64 auf, die in Nuten 44 des Hohlprofils eingreifen. Die Rotationseinrichtung 60 weist eine Befestigungsplatte 65 auf, die mit dem Antriebsriemen 56 verbunden ist, so dass die Rotationseinrichtung 60 zusammen mit der Reinigungslanze 14 längs der Trägerschiene 40 verfahrbar ist.

In der Figur 6 ist eine weitere Ausführungsform der Messeinrichtung 110 dargestellt. Das Antriebsrad 53 der dritten Antriebseinrichtung 52 der Vortriebseinrichtung 50 weist Messmarkierungen 118 in Form von Öffnungen 119 auf, die von einem Messsensor 112 detektiert werden. Der Messsensor 112 ist an einer Sensorhalterung 114 befestigt und an die Speicher- und Dokumentationseinrichtung 102 angeschlossen. Durch Abzählen der Messmarkierungen 118 wird die Einschiebtiefe E ermittelt.

An die Antriebseinrichtung 52 ist eine Drehmomentmesseinrichtung 120 angeschlossen, die ebenfalls an die Speicher- und Dokumentationseinrichtung 102 angeschlossen ist.

In der Figur 7 sind zwei erste Führungsschienen 32 am Flansch 2 mittels der Befestigungsmittel 39 befestigt. Bevor der Reinigungsvorgang durchgeführt wird, ist die Ausrichtung der XY-Verschiebeeinrichtung 30 zur Rohranordnung zu überprüfen. In der Regel kann die erste Führungsschiene 32 nicht parallel zu den Rohrreihen 152 am Flansch 2 angeordnet werden, so dass ein Winkelversatz α auftritt. Dieser Winkelversatz α zwischen der Parallele 150 zur ersten Führungsschiene 32 und der Rohrreihe 152 wird ermittelt und in der Steuereinrichtung 100 abgelegt, so dass beim Verfahren der Reinigungseinrichtung 12 dieser Winkelversatz α in die Ortskoordinaten X und Y der Rohre 4 eingerechnet und berücksichtigt werden kann.

Hierzu wird manuell mit der Reinigungseinrichtung 12 z.B. das Rohr 4a angefahren und die Position abgespeichert. Anschließend wird die Reinigungseinrichtung 12 mittels der XY-Verschiebeeinrichtung 30 vor das Rohr 4b gefahren und diese Position ebenfalls abgespeichert, woraus dann der Winkel α der Rohrreihe 152 ermittelt werden kann.

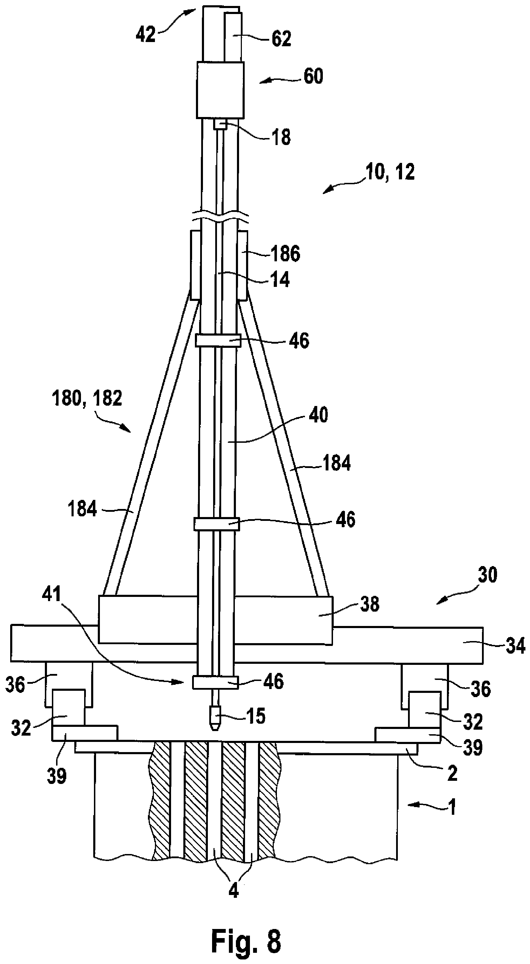

In der Figur 8 ist eine weitere Ausführungsform dargestellt, die eine Reinigungsvorrichtung 10 zeigt, die an einem aufrechtstehenden Rohrbündel 1 montiert ist.

Die XY-Verschiebeeinrichtung 30 entspricht der XY-Verschiebeeinrichtung gemäß der Figur 1. Ebenfalls ist eine Trägerschiene 40 an der XY-Verschiebeeinrichtung 30 angeordnet, die die Reinigungseinrichtung 12 mit Lanze 14 und Rotationseinrichtung 60 trägt. Diese Anordnung entspricht ebenfalls der in der Figur 1 gezeigten Ausführungsform. Dies gilt auch für die Vortriebseinrichtung 50, die in der Figur 8 nicht dargestellt ist.

Die Abstützeinrichtung 180 ist in Form einer Versteifungseinrichtung 182 ausgebildet und umfasst zwei Versteifungselemente 184, die über eine Versteifungsplatte 186 mit der Trägerschiene 40 verbunden sind. Der Fahrwagen der zweiten Antriebseinrichtung 38 ist deutlich länger ausgebildet als dies in der Ausführungsform der Figur 1 dargestellt ist, damit die Versteifungseinrichtung 184 dort angebracht werden kann.

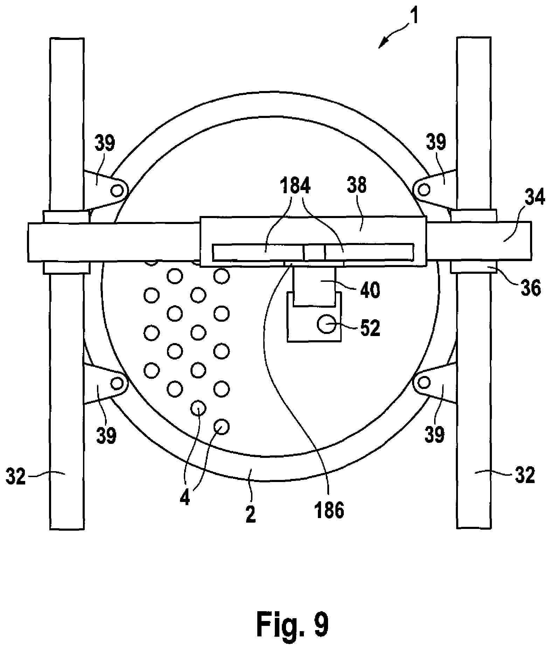

Figur 9 ist die Draufsicht auf die in Figur 8 dargestellte Ausführungsform.

In den Figuren 10 und 11 sind verschiedene Hindernisse in Form von Verkrustungen 200, 202a,b,c innerhalb der Rohre 4 eingezeichnet. Unter den jeweiligen Rohren 4 ist ein schematisches Diagramm des Drehmomentes D in Abhängigkeit von der Wegstrecke z dargestellt.

In der Figur 10 ist ein nicht auflösbares Hindernis 200 dargestellt.

Das Drehmoment D der dritten Antriebseinrichtung 52 ist beim Einschieben der Reinigungslanze 14 in das Rohr 4 konstant und steigt sprunghaft an, wenn die Lanzenspitze 15 mit der Austrittsdüse 16 auf ein Hindernis in Form einer Verkrustung 200 trifft. Das Drehmoment wird mit der Drehmomentmesseinrichtung 120 erfasst, die z.B. im oder am Servomotor der dritten Antriebseinrichtung 52 angeordnet ist (s. auch Fig. 6).

Dieser rapide Anstieg ist im Diagramm der Figur 10 dargestellt, wobei dieser Anstieg die maximale Einschiebtiefe E_{M} markiert.

Mittels der Reinigungslanze 14 kann dieses Hindernis 200 nicht beseitigt werden, so dass an dieser Stelle der Reinigungsvorgang des Rohres 4 abgebrochen wird. Aus dem Wert des Drehmoments D ist ablesbar, dass es sich hier um ein unüberwindliches Hindernis handelt. Die entsprechenden Daten, wie Einschiebtiefe E_{M} und Drehmoment D, werden in der Steuereinrichtung 100 bzw. Speicher- und Dokumentationseinrichtung 102 abgespeichert.

In der Figur 11 sind zwei weniger große auflösbare Verkrustungen 202a, 202b und eine durchgängige, auflösbare Verkrustung 200c eingezeichnet. Wenn die Reinigungslanze 14 mit der Lanzenspitze 15 gegen die Verkrustung 202a stößt, steigt das Drehmoment D an. Wenn es gelingt, die erste Verkrustung 202a aufzulösen, kann der Vorschub der Reinigungslanze 14 fortgesetzt werden, so dass das Drehmoment der dritten Antriebseinrichtung 52 wieder abfällt bis die Reinigungslanze 14 mit der Lanzenspitze 15 auf das nächste Hindernis in Form der Verkrustung 202b trifft.

Wenn auch dort die Verkrustung 202b aufgelöst und beseitigt werden kann, fällt das Drehmoment wieder ab und der Vorschub kann ebenfalls fortgesetzt werden, bis die Reinigungslanze 14 auf das dritte auflösbare Hindernis 200c trifft. Nach Beseitigung auch dieses Hindernisses 200c kann der Vorschub weiter fortgesetzt werden.

Aus dem nur schematisch dargestellten Verlauf der Drehmomentkurve lässt sich somit ablesen, wie stark die Verschmutzung bzw. die Verkrustungen 200, 202a,b,c innerhalb des Rohres 4 sind. Anhand der Daten E₁, E₂ und E₃ ist dann auch der Ort lokalisierbar, wo genau diese Verschmutzungen aufgetreten sind.

Es lässt sich somit anhand sämtlicher Daten ein dreidimensionales Reinigungsprofil des Rohrbündels 1 erstellen, aus dem der Ort der Verkrustungen 200, 202a,b,c und der Grad der Verkrustungen bzw. Verschmutzung ablesbar ist.

Ein beispielhafter Ablauf der Reinigung eines Rohrbündels 1 kann wie folgt vonstattengehen:
Die einzelnen Führungsschienen 34,36 werden zusammen mit der oder den Reinigungseinrichtung/en 12 sowie der Steuereinrichtung 100 angeliefert und vor Ort zu einer Reinigungsvorrichtung 10 zusammengebaut. Zunächst wird die erste Führungsschiene 32 an dem Rohrbündel 1 montiert und anschließend wird die zweite Führungsschiene 34 an der ersten Führungsschiene 32 montiert.

Der Vorteil der Reinigungsvorrichtung 10 besteht unter anderem darin, dass die Führungsschienen 32,34 sowohl an horizontal ausgerichteten Rohrbündeln 1 als auch an vertikal ausgerichteten Rohrbündeln 1 montiert werden kann. Die Reinigungsvorrichtung 10 ist weitaus flexibler einsetzbar als dies bei Rohrreinigungsvorrichtungen beim Stand der Technik der Fall ist, die beispielsweise auf einem Wagen montiert sind, der vor das zu reinigende Rohrbündel 1 gefahren werden muss, was nur im Fall von horizontal angeordneten Rohrbündeln 1 möglich ist.

Anschließend wir der Winkelversatz α ermittelt und der Arbeitsbereich festgelegt. Hierfür werden vier außerhalb des Rohrbündels 1 liegende Eckpunkte eines Vierecks angefahren. Die Stirnseite des Rohrbündels 1 befindet sich dann innerhalb des Arbeitsbereiches, in dem die Reinigungseinrichtung/en 12 verfahren werden kann/können.

Wenn es sich um einen erstmaligen Reinigungsvorgang eines Rohrbündels 1 handelt, ist es erforderlich die Geometriedaten in die Steuereinrichtung 100 einzugeben. Wenn diese Geometriedaten der Rohre 4 vom Betreiber oder Hersteller des Rohrbündels 1 bereitgestellt und dann in die Steuereinrichtung 100 eingegeben worden sind, kann der Reinigungsvorgang nach der Eingabe gestartet werden, wobei der Reinigungsvorgang z.B. an einem Referenzrohr 4c (s. Figur 3) beginnt, das manuell angefahren wird. Dies kann z.B. das erste Rohr 4 der ersten Reihe eines Rohrbündels 1 sein. Das Referenzrohr 4c kann auch ein beliebiges Rohr 4 des Rohrbündels 1 sein. Wenn keine Geometriedaten vorliegen, werden mittels eines manuellen Anfahrens der Rohre 4 die Geometriedaten vor Ort ermittelt und vorzugsweise gleichzeitig auch die Rohre 4 gereinigt.

Wenn die Reinigungseinrichtung 12 vor ein Rohr 4 fährt, das mit einem Stopfen verschlossen ist, kann die Reinigungslanze 14 nicht in das Rohr 4 einfahren. Es wird diesem Rohr 4 dann eine entsprechende Information zugeordnet, dass die Reinigungslanze 14 nicht einfahren konnte. Diese Daten werden anschließend in der Speicher- und Dokumentationseinrichtung 102 abgespeichert.

Wenn die Reinigungslanze 14 in das zu reinigende Rohr 4 einfahren kann, gibt es zwei Möglichkeiten. Entweder kann die Reinigungslanze 14 vollständig bis zum gegenüberliegenden Ende in das Rohr 4 eingeschoben werden. Dann kann die Reinigung planmäßig erfolgen und dieser Reinigungserfolg wird ebenfalls durch Abspeichern der Rohrdaten und der maximal erreichten Einschiebtiefe L_{E} dokumentiert.

Wenn das Rohr 4 nur teilweise einfahren kann, erfolgt die Reinigung nicht planmäßig. Es werden die maximal erreichte Einschiebtiefe E_{M} sowie gegebenenfalls die auftretenden Drehmomente D ermittelt, so dass weitere Rückschlüsse auf den Grad der Verschmutzung gezogen werden können. Auch diese Daten werden anschließend in der Speicher- und Dokumentationseinrichtung 102 abgelegt.

Wenn es gelingt, die Verschmutzung mittels der eingefahrenen Reinigungslanze 14 zu beseitigen, wird auch dies abgespeichert und dokumentiert.

Wenn alle Rohre 4 eines Rohrbündels 1 angefahren worden sind, ist der Reinigungsvorgang beendet.

Mit dem erfindungsgemäßen Verfahren ist sichergestellt, dass kein Rohr versehentlich vergessen wird, wie dies bei einer herkömmlichen manuellen Reinigung der Rohre der Fall sein kann. Zudem zeichnet sich das Reinigungsverfahren dadurch aus, dass die Reinigungsprozesse in den Rohren mit einer beliebigen Vorschubgeschwindigkeit der Reinigungslanze und dem Reinigungswerkzeug durchgeführt werden können, so dass keine Reinigungssprünge oder Unterbrechungen auftreten.

Wenn mehrere Reinigungslanzen 14 gleichzeitig zum Einsatz kommen, wird die Reinigungszeit noch einmal verkürzt. Ein Weiterfahren der Reinigungseinrichtung 12 findet immer erst dann statt, wenn alle Reinigungslanzen 14 ihre angefahrenen Rohre 4 verlassen haben. Insbesondere dann, wenn z.B. eine der Reinigungslanzen 14 vorzeitig aus dem Rohr wegen eines nicht überwindbaren Hindernisses herausgefahren worden ist, muss auf die andere oder die anderen Reinigungslanzen 14 gewartet werden, die eine vollständige Reinigung ihres/ihrer Rohre durchführen können.

### Bezugszeichenliste

- 1: Rohrbündel
- 2: Flansch
- 3: Befestigungsöffnungen
- 4: Rohr
- 4a,b,c: Rohr
- 5: offenes Ende des Rohrbündels

- 10: Reinigungsvorrichtung
- 12: Reinigungseinrichtung

- 14: Reinigungslanze
- 15: Spitze der Reinigungslanze
- 16: Austrittsdüse
- 17: Lanzenrohr
- 18: Anschlussende

- 30: XY-Verschiebeeinrichtung
- 32: erste Führungsschiene (X)
- 34: zweite Führungsschiene (Y)
- 36: erste Antriebseinrichtung mit Fahrwagen
- 38: zweite Antriebseinrichtung mit Fahrwagen
- 39: Befestigungsmittel am Flansch

- 40: Trägerschiene
- 41: vorderes Ende
- 42: hinteres Ende
- 43: Schenkel
- 44: Nut
- 46: Lanzenführungselement
- 47: flexibles Verbindungselement
- 48: Verbindungselement

- 50: Vortriebseinrichtung
- 52: dritte Antriebseinrichtung
- 53: Antriebsrad
- 54: Umlenkrolle
- 56: Antriebsriemen

- 60: Rotationseinrichtung
- 62: Drehdurchführung
- 64: Schienenelement
- 65: Befestigungsplatte
- 66: vierte Antriebseinrichtung

- 70: Versorgungsschlauch

- 80: Abstützeinrichtung
- 82: Aufhängung
- 83: Stützbock
- 84: Stützstrebe
- 86: Stützbocktraverse
- 88: Traverse, Laufschiene

- 90: Laufkatze
- 92: Seilwinde
- 94: fünfte Antriebseinrichtung
- 96: Aufhängungsmittel, Seil
- 98: Halterung
- 100: Steuereinrichtung
- 102: Speicher- und Dokumentationseinrichtung
- 104: Fernbedienung

- 110: Messeinrichtung
- 112: Messsensor
- 114: Sensorhalterung
- 118: Messmarkierungen auf Reinigungslanze
- 119: Öffnung

- 120: Drehmomentmesseinrichtung

- 150: Parallele
- 152: Rohrreihe

- 180: Abstützeinrichtung
- 182: Versteifungseinrichtung
- 184: Versteifungselement
- 186: Versteifungsplatte

- 200: Verkrustung
- 202a,b,c: Verkrustung

- α: Winkelversatz zwischen Parallele und Rohrreihe

## Patentansprüche

1. Verfahren zum Reinigen von Rohren (4) von Rohrbündeln (1), die stirnseitig offene Enden (5) aufweisen, bei dem
- wenigstens eine Reinigungsvorrichtung (10) angrenzend an den offenen Enden (5) des Rohrbündels (1) positioniert wird, wobei die Reinigungsvorrichtung (10) eine Reinigungseinrichtung (12) mit einer Reinigungslanze (14) aufweist,
- anschließend die Reinigungslanze (14) längs eines Verfahrweges nacheinander fluchtend zum jeweiligen Rohr (4) des Rohrbündels (1) angeordnet wird,
- die Reinigungslanze (14) in Rotation versetzt und in das jeweilige Rohr (4) eingeschoben wird sowie mit Flüssigkeit unter Hochdruck beaufschlagt wird,
**dadurch gekennzeichnet,**
**dass** die Einschiebtiefe E der rotierenden Reinigungslanze (14) während des Einschiebens der Reinigungslanze (14) in den jeweiligen Rohren (4) des Rohrbündels (1) gemessen und überwacht wird, und
**dass** die Einschiebtiefen E in einer Speicher- und Dokumentationseinrichtung (102) abgespeichert, verarbeitet und dokumentiert werden, wobei für jeden Reinigungsvorgang eines Rohrbündels (1) mindestens die Einschiebtiefen E den jeweiligen Rohren (4) zugeordnet werden und ein dreidimensionales Reinigungsprofil des Rohrbündels (1) erstellt wird.

2. Verfahren nach Anspruch 1, **dadurch gekennzeichnet, dass** das Reinigungsverfahren teil-oder vollautomatisch durchgeführt wird.

3. Verfahren nach Anspruch 1 oder 2, **dadurch gekennzeichnet, dass** eine Reinigungsvorrichtung (10) mit mehreren Reinigungseinrichtungen (12) verwendet wird, deren Reinigungslanzen (14) gleichzeitig in benachbarte Rohre (4) eingeschoben werden, wobei die Einschiebtiefen E der Reinigungslanzen (14) unabhängig voneinander gemessen und abgespeichert werden.

4. Verfahren nach einem der Ansprüche 1 bis 3, **dadurch gekennzeichnet, dass** die Messung der Einschiebtiefe E mittels einer dritten Antriebseinrichtung (52) einer Vortriebseinrichtung (50) der Reinigungslanze (14) durchgeführt wird.

5. Verfahren nach einem der Ansprüche 1 bis 4, **dadurch gekennzeichnet, dass** die Drehmomentwerte D einer dritten Antriebseinrichtung (52) einer Vortriebseinrichtung (50) der Reinigungslanze (14) während des Einschiebens der Reinigungslanze (14) in das Rohr (4) kontinuierlich oder diskontinuierlich gemessen und die gemessenen Drehmomentwerte D zusammen mit den jeweiligen Einschiebtiefen E in der Speicher- und Dokumentationseinrichtung (102) abgespeichert und einander zugeordnet werden.

6. Verfahren nach Anspruch 5, **dadurch gekennzeichnet, dass** bei einem Anstieg des Drehmomentwertes über einen vorgegebenen Wert Dv die dritte Antriebseinrichtung (52) abgeschaltet, in den Rücklauf, in einen Freispülmodus oder in einen Rüttelmodus geschaltet wird.

7. Verfahren nach einem der Ansprüche 1 bis 6, **dadurch gekennzeichnet, dass** vor dem erstmaligen Einschieben der wenigstens einen Reinigungslanze (14) in die Rohre (4) die Ausrichtung der Reinigungsvorrichtung (10) bezüglich des Rohrbündels (1) ermittelt und die ermittelten Ausrichtungsdaten abgespeichert und zur Korrektur des Verfahrweges der Reinigungseinrichtung (12) verwendet werden.

8. Reinigungsvorrichtung (10) zum Reinigen von Rohren (4), von Rohrbündeln (1), die stirnseitig offene Enden (5) aufweisen,
mit einer XY-Verschiebeeinrichtung (30),
mit mindestens einer Reinigungseinrichtung (12), die an der XY-Verschiebeeinrichtung (30) angeordnet ist und die eine Reinigungslanze (14) sowie eine Rotationseinrichtung (60) zum Rotieren der Reinigungslanze (14) und eine Vortriebseinrichtung (50) zum Ein- und Ausfahren der Reinigungslanze (14) aufweist, und
mit einer Trägerschiene (40) zur Abstützung der Reinigungslanze (14),
**dadurch gekennzeichnet,**
**dass** die Reinigungseinrichtung (12) eine Messeinrichtung (110) zur Messung von Einschiebtiefen E der Reinigungslanze (14) in den Rohren (4) und eine mit der Messeinrichtung (110) verbundene Speicher- und Dokumentationseinrichtung (102) aufweist und dadurch dass die Reinigungsvorrichtung dazu eingerichtet ist, das Verfahren nach einem der vorgehenden Ansprüche auszuführen.

9. Reinigungsvorrichtung (10) nach Anspruch 8, **dadurch gekennzeichnet, dass** die Speicher- und Dokumentationseinrichtung (102) zur Ablage, Verarbeitung, Aufbereitung und Auswertung von während des Betriebs der Reinigungsvorrichtung (10) anfallender Daten und/oder eingegebener Daten ausgebildet ist.

10. Reinigungsvorrichtung (10) nach Anspruch 8 oder 9, **dadurch gekennzeichnet, dass** eine Steuereinrichtung (100) vorgesehen ist und dass die XY-Verschiebeeinrichtung (30) eine erste Antriebseinrichtung (36) und eine zweite Antriebseinrichtung (38) aufweist, die an die Steuereinrichtung (100) angeschlossen sind.

11. Reinigungsvorrichtung (10) nach einem der Ansprüche 8 bis 10, **dadurch gekennzeichnet, dass** die Vortriebseinrichtung (50) eine dritte Antriebseinrichtung (52) aufweist, die an die Steuereinrichtung (100) angeschlossen ist.

12. Reinigungsvorrichtung (10) nach einem der Ansprüche 8 bis 11, **dadurch gekennzeichnet, dass** die Messeinrichtung (110) Messmarkierungen (118, 119) aufweist, wobei die Messmarkierungen (118, 119) an der Reinigungslanze (14) oder einer sich bewegenden Komponente der Vortriebseinrichtung (50) angeordnet sind.

13. Reinigungsvorrichtung nach einem der Ansprüche 8 bis 12, **dadurch gekennzeichnet, dass** die Vortriebseinrichtung (50) eine Drehmomentmesseinrichtung (120) für die Messung des Drehmoments der dritten Antriebseinrichtung (52) aufweist.

14. Reinigungsvorrichtung (10) nach einem der Ansprüche 8 bis 13, **dadurch gekennzeichnet, dass** mindestens eine Abstützeinrichtung (80,180) zur Abstützung der Trägerschiene (40) vorgesehen ist.

15. Reinigungsvorrichtung (10) nach Anspruch 14, **dadurch gekennzeichnet, dass** die Abstützeinrichtung (80) eine Aufhängung (82) ist.

## Claims

1. Method for cleaning pipes (4) of pipe bundles (1) which have ends (5) which are open at the end face, wherein
- at least one cleaning apparatus (10) is positioned adjacent to the open ends (5) of the pipe bundle (1), wherein the cleaning apparatus (10) has a cleaning device (12) having a cleaning lance (14),
- subsequently, the cleaning lance (14) is arranged along a travel path in alignment one after the other with respect to the respective pipe (4) of the pipe bundle (1),
- the cleaning lance (14) is rotated and inserted into the respective pipe (4) and acted on with fluid under high pressure,
**characterised in that**
the insertion depth E of the rotating cleaning lance (14) is measured and monitored during the insertion of the cleaning lance (14) in the respective pipes (4) of the pipe bundle (1), and
**in that** the insertion depths E are stored, processed and documented in a storage and documentation device (102), wherein, for each cleaning operation of a pipe bundle (1), at least the insertion depths E are associated with the respective pipes (4) and a three-dimensional cleaning profile of the pipe bundle (1) is produced.

2. Method according to claim 1, **characterised in that** the cleaning method is carried out in a partially or fully automatic manner.

3. Method according to claim 1 or 2, **characterised in that** there is used a cleaning apparatus (10) which has a plurality of cleaning devices (12) whose cleaning lances (14) are inserted at the same time in adjacent pipes (4), wherein the insertion depths E of the cleaning lances (14) are measured and stored independently of each other.

4. Method according to any one of claims 1 to 3, **characterised in that** the measurement of the insertion depth E is carried out by means of a third drive device (52) of a propulsion device (50) of the cleaning lance (14).

5. Method according to any one of claims 1 to 4, **characterised in that** the torque values D of a third drive device (52) of a propulsion device (50) of the cleaning lance (14) is measured in a continuous or discontinuous manner during the insertion of the cleaning lance (14) into the pipe (4) and the measured torque values D together with the respective insertion depths E are stored and associated with each other in the storage and documentation device (102).

6. Method according to claim 5, **characterised in that**, in the event of an increase of the torque value above a predetermined value D_{V}, the third drive device (52) is switched off, switched into reverse, into a flushing mode or into a vibration mode.

7. Method according to any one of claims 1 to 6, **characterised in that**, prior to the initial insertion of the at least one cleaning lance (14) into the pipes (4), the orientation of the cleaning apparatus (10) with respect to the pipe bundle is established and the orientation data which are established are stored and used to correct the travel path of the cleaning device (12).

8. Cleaning apparatus (10) for cleaning pipes (4) of pipe bundles (1) which have ends (5) which are open at the end face,
having an XY displacement device (30),
having at least one cleaning device (12) which is arranged on the XY displacement device (30) and which has a cleaning lance (14) and a rotation device (60) for rotating the cleaning lance (14) and a propulsion device (50) for retracting and extending the cleaning lance (14), and
having a carrier rail (40) for supporting the cleaning lance (14),
**characterised in that**
the cleaning device (12) has a measurement device (110) for measuring insertion depths E of the cleaning lance (14) in the pipes (4) and a storage and documentation device (102) which is connected to the measurement device (110) and **in that** the cleaning apparatus is configured to carry out the method according to any one of the preceding claims.

9. Cleaning apparatus (10) according to claim 8, **characterised in that** the storage and documentation device (102) is constructed for filing, processing, preparing and evaluating data which occur during the operation of the cleaning apparatus (10) and/or input data.

10. Cleaning apparatus (10) according to claim 8 or 9, **characterised in that** a control device (100) is provided and **in that** the XY displacement device (30) has a first drive device (36) and a second drive device (38) which are connected to the control device (100).

11. Cleaning apparatus (10) according to any one of claims 8 to 10, **characterised in that** the propulsion device (50) has a third drive device (52) which is connected to the control device (100).

12. Cleaning apparatus (10) according to any one of claims 8 to 11, **characterised in that** the measurement device (110) has measurement markings (118, 119), wherein the measurement markings (118, 119) are arranged on the cleaning lance (14) or a moving component of the propulsion device (50).

13. Cleaning apparatus (10) according to any one of claims 8 to 12, **characterised in that** the propulsion device (50) has a torque measurement device (120) for the measurement of the torque of the third drive device (52).

14. Cleaning apparatus (10) according to any one of claims 8 to 13, **characterised in that** at least one support device (80, 180) is provided to support the carrier rail (40).

15. Cleaning apparatus (10) according to claim 14, **characterised in that** the support device (80) is a suspension (82) .

## Revendications

1. Procédé de nettoyage de tubes (4) de faisceaux de tubes (1) qui comportent des extrémités ouvertes frontalement (5), procédé dans lequel
- au moins un dispositif de nettoyage (10) est positionné de manière adjacente aux extrémités ouvertes (5) du faisceau de tubes (1), le dispositif de nettoyage (10) comportant un moyen de nettoyage (12) pourvu d'une lance de nettoyage (14),
- la lance de nettoyage (14) est ensuite disposée le long d'un trajet de déplacement en étant alignée avec le tube respectif (4) du faisceau de tubes (1),
- la lance de nettoyage (14) est mise en rotation et insérée dans le tube respectif (4) et soumise à un liquide sous haute pression, **caractérisé en ce que**
la profondeur d'insertion E de la lance de nettoyage rotative (14) est mesurée et surveillée pendant l'insertion de la lance de nettoyage (14) dans les tubes respectifs (4) du faisceau de tubes (1), et
les profondeurs d'insertion E sont mémorisées, traitées et documentées dans un moyen de mémorisation et de documentation (102), au moins les profondeurs d'insertion E étant associées aux tubes respectifs (4), et un profil de nettoyage tridimensionnel du faisceau de tubes (1) étant créé, pour chaque processus de nettoyage d'un faisceau de tubes (1).

2. Procédé selon la revendication 1, **caractérisé en ce que** le procédé de nettoyage est effectué de manière partiellement ou totalement automatique.

3. Procédé selon la revendication 1 ou 2, **caractérisé en ce qu'**un dispositif de nettoyage (10) est utilisé qui comprend plusieurs moyens de nettoyage (12) dont les lances de nettoyage (14) sont insérées simultanément dans des tubes (4) adjacents, les profondeurs d'insertion E des lances de nettoyage (14) pouvant être mesurées et mémorisées indépendamment les unes des autres.

4. Procédé selon l'une des revendications 1 à 3, **caractérisé en ce que** la mesure de la profondeur d'insertion E est réalisée à l'aide d'un troisième moyen d'entraînement (52) d'un dispositif d'avancement (50) de la lance de nettoyage (14).

5. Procédé selon l'une des revendications 1 à 4, **caractérisé en ce que** les valeurs de couple D d'un troisième moyen d'entraînement (52) d'un dispositif d'avancement (50) de la lance de nettoyage (14) pendant l'insertion de la lance de nettoyage (14) dans le tube (4) sont mesurées de manière continue ou discontinue et les valeurs de couple D mesurées sont mémorisées conjointement avec les profondeurs d'insertion E respectives dans le moyen de mémorisation et de documentation (102) et associées les unes aux autres.

6. Procédé selon la revendication 5, **caractérisé en ce que**, lorsque la valeur de couple dépasse une valeur spécifiée Dᵥ, le troisième moyen d'entraînement (52) est désactivé, commuté en marche arrière, en mode balayage ou en mode succussion.

7. Procédé selon l'une des revendications 1 à 6, **caractérisé en ce que**, avant que l'au moins une lance de nettoyage (14) ne soit insérée dans les tubes (4) pour la première fois, l'orientation du dispositif de nettoyage (10) est déterminée par rapport au faisceau de tubes (1) et les données d'orientation déterminées sont mémorisées et utilisées pour corriger le trajet de déplacement du moyen de nettoyage (12).

8. Dispositif de nettoyage (10) destiné à nettoyer des tubes (4) de faisceaux de tubes (1) qui comportent des extrémités ouvertes frontalement (5), ledit dispositif de nettoyage comprenant
un moyen de déplacement XY (30),
au moins un moyen de nettoyage (12) qui est disposé sur le moyen de déplacement XY (30) et qui comporte une lance de nettoyage (14) ainsi qu'un moyen de rotation (60) destiné à faire tourner la lance de nettoyage (14) et un moyen d'avancement (50) destiné à rétracter et déployer la lance de nettoyage (14), et
un rail porteur (40) destiné à supporter la lance de nettoyage (14),
**caractérisé en ce que**
le moyen de nettoyage (12) comporte un moyen de mesure (110) destiné à mesurer la profondeur d'insertion E de la lance de nettoyage (14) dans les tubes (4) et un moyen de mémorisation et de documentation (102) relié au moyen de mesure (110), et
le dispositif de nettoyage est conçu pour mettre en œuvre le procédé selon l'une des revendications précédentes.

9. Dispositif de nettoyage (10) selon la revendication 8, **caractérisé en ce que** le moyen de mémorisation et de documentation (102) est conçu pour mémoriser, traiter, préparer et évaluer des données survenant lors du fonctionnement du dispositif de nettoyage (10) et/ou des données saisies.

10. Dispositif de nettoyage (10) selon la revendication 8 ou 9, **caractérisé en ce qu'**un moyen de commande (100) est prévu et **en ce que** le moyen de déplacement XY (30) comporte un premier moyen d'entraînement (36) et un deuxième moyen d'entraînement (38), lesquels sont raccordés au moyen de commande (100).

11. Dispositif de nettoyage (10) selon l'une des revendications 8 à 10, **caractérisé en ce que** le moyen d'avancement (50) comporte un troisième moyen d'entraînement (52) qui est raccordé au moyen de commande (100) .

12. Dispositif de nettoyage (10) selon l'une des revendications 8 à 11, **caractérisé en ce que** le moyen de mesure (110) comporte des repères de mesure (118, 119), les repères de mesure (118, 119) étant disposés sur la lance de nettoyage (14) ou un composant mobile du moyen d'avancement (50).

13. Dispositif de nettoyage selon l'une des revendications 8 à 12, **caractérisé en ce que** le moyen d'avancement (50) comporte un moyen de mesure de couple (120) destiné à mesurer le couple du troisième moyen d'entraînement (52).

14. Dispositif de nettoyage (10) selon l'une des revendications 8 à 13, **caractérisé en ce qu'**au moins un moyen de support (80, 180) est prévu pour supporter le rail porteur (40).

15. Dispositif de nettoyage (10) selon la revendication 14, **caractérisé en ce que** le dispositif de support (80) est une suspension (82).
